# EUROPEAN PATENT APPLICATION

(11) **EP 1 850 136 A1**
(43) Date of publication of application: **31.10.2007**
(21) Application number: 06008848.1
(22) Date of filing: 28.04.2006
(51) Int. Cl.: G01N 35/04, B01F 11/00, B01L 9/06

(54) **Shaker device for analyzer apparatus and analyzer comprising such a device**

(71) Applicant: F.HOFFMANN-LA ROCHE AG, 4070 Basel (CH); Roche Diagnostics GmbH, 68305 Mannheim (DE)
(72) Inventor: Müller, Siegfried, 6344 Meierskappel (CH); Stettler, Ueli, 6330 Cham (CH)
(74) Representative: Ventocilla, Abraham

(57) **Abstract**

A shaker device for shaking liquids in a clinical chemistry analyzer. The shaker device comprises an eccentric pin (16) on a rotatable disk (15), a motor (12) for rotating said disk (15) and a movable piece (18) having a joint (19) for receiving said eccentric pin (16). The movable piece (18) is mounted on a first movable part (22) of a first linear motion guide (21) having a first rail (23) on which the first movable part (22) can slide in a first direction (Y-direction). The first rail (23) of said first linear motion guide (21) is mounted on an intermediate plate (24) which is mounted on a second movable part (26) of a second linear motion guide (25) having a second rail (27) on which the second movable part (26) can slide in a second direction (X-direction) which is normal to said first direction.

## Description

The invention concerns a shaker device suitable for being used as part of a clinical chemistry analyzer.

The invention further concerns an automatic analyzer comprising a shaker device.

Some of the liquids used in automatic clinical chemistry analyzers require agitation during predetermined time intervals, whereas other required liquids require no agitation at all.

Liquids which require agitation during predetermined time intervals are e.g. solutions containing magnetic particles, which should be uniformly distributed in the solution,

Shaker devices suitable for performing the required agitation are thus a necessary part of automatic clinical chemistry analyzers.

In prior art apparatuses it has therefore been necessary to have additional racks for containers which contain liquids that require agitation and a shaker device connectable to such racks or to selectively transport such containers to a shaker station for agitating liquid containers and thereby the liquids contained therein. A disadvantage of both approaches is that they increase the complexity and the manufacturing cost of automatic clinical chemistry analyzers. It is therefore desirable to have racks and analyzers which do not have this disadvantage.

A first aim of the invention is therefore to provide a shaker device suitable for being used as part of a clinical chemistry analyzer.

A second aim of the invention is to provide an analyzer which comprises a shaker device connectable to a rack for liquid containers and which makes it possible to eliminate the above mentioned disadvantages.

According to a first aspect of the invention the above mentioned first aim is achieved with a shaker device having the features defined by claim 1. A preferred embodiment is defined by claim 2.

According to a second aspect of the invention the above mentioned second aim is achieved with an analyzer having the features defined by claims 3 or 4.

The subject invention will now be described in terms of its preferred embodiments with reference to the accompanying drawings. These embodiments are set forth to aid the understanding of the invention, but are not to be construed as limiting.
- Fig. 1: shows a perspective view of a first embodiment shaker device according to the invention.
- Fig. 2: shows a top plan view of the shaker device shown by Fig. 1.
- Fig. 3: shows a cross-sectional view of the shaker device of Fig. 1 taken along a plane A-A in Fig. 2.
- Fig. 4: shows a cross-sectional view of the shaker device of Fig. 1 taken along a plane B-B in Fig. 3.
- Fig. 5: shows a perspective view of a rack 31.
- Fig. 6: shows an exploded view of rack 31 shown by Fig. 5, movable part 35 of rack 31 and a casing 37 containing several containers 36 which each contain a liquid to be agitated.
- Fig. 7: shows a perspective view of the shaker device shown by Fig. 1 with its coupling member 18 connected to the movable part 35 of rack 31 in Fig. 5.
- Fig. 8: illustrates the use of a shaker device of the type shown by Figures 1-4 in an analyzer comprising a rack of the type described with reference to Figures 5 and 6.
- Fig. 9: shows a perspective view of a second embodiment of a shaker device according to the invention.
- Fig. 10: shows a top plan view of the shaker device shown by Fig. 9.
- Fig. 11: shows a cross-sectional view of the shaker device of Fig. 9 taken along a plane E-E in Fig. 10.

### REFERENCE NUMERALS IN DRAWINGS

- 11: support plate
- 12: step motor
- 13: coded disk for initialization
- 14: light barrier detector
- 15: rotatable disk
- 16: eccentric pin
- 18: movable piece / coupling member
- 19: joint
- 21: linear motion guide in Y-direction
- 22: movable part of linear motion guide 21
- 23: rail of linear motion guide 21
- 24: intermediate plate
- 25: linear motion guide in X-direction
- 26: movable part of linear motion guide 25
- 27: rail of linear motion guide 25
- 28: support
- 31: rack
- 32: frame of rack 31
- 33: section of frame 32
- 34: section of frame 32
- 35: movable part of rack 31
- 36: liquid container
- 37: liquid container carrier (e,g. a kit of reagents)
- 38: opening of movable part
- 39: opening of movable part
- 41: pin
- 42: pin
- 43: pin
- 44: support plate
- 45: support wall
- 46: basis plate
- 47: rack holder guide
- 51: tray
- 52: joint

### DETAILED DESCRIPTION OF PREFERRED EMBODIMENTS

An automatic clinical chemistry analyzer comprises in general means for handling liquids like biological samples or reagents and means for analyzing sample-reagent-mixtures. A reagent can be e.g. a liquid containing magnetic particles.

In the following description only those parts of an automatic clinical chemistry analyzer are described which are necessary to describe how liquid containers are agitated by means of a shaker device which is part of the analyzer.

### EXAMPLES

### EXAMPLE 1 - EXAMPLE OF A FIRST EMBODIMENT OF A SHAKER DEVICE ACCORDING TO THE INVENTION

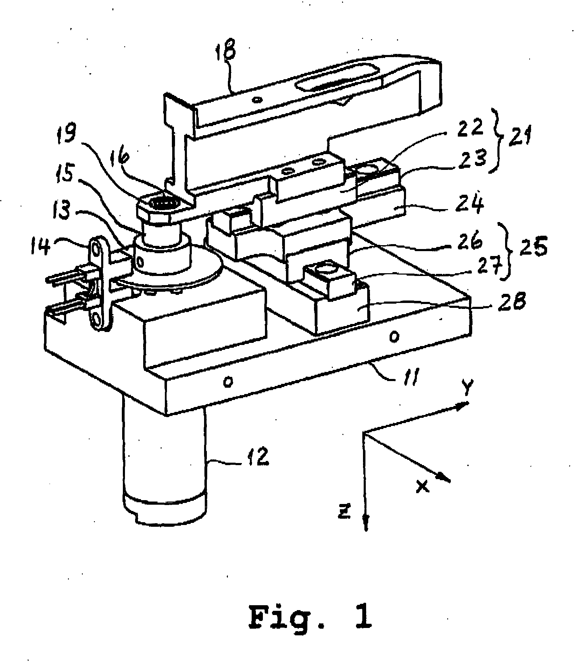

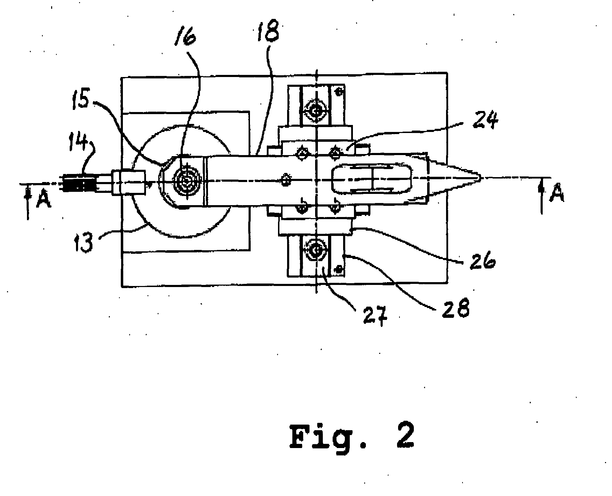

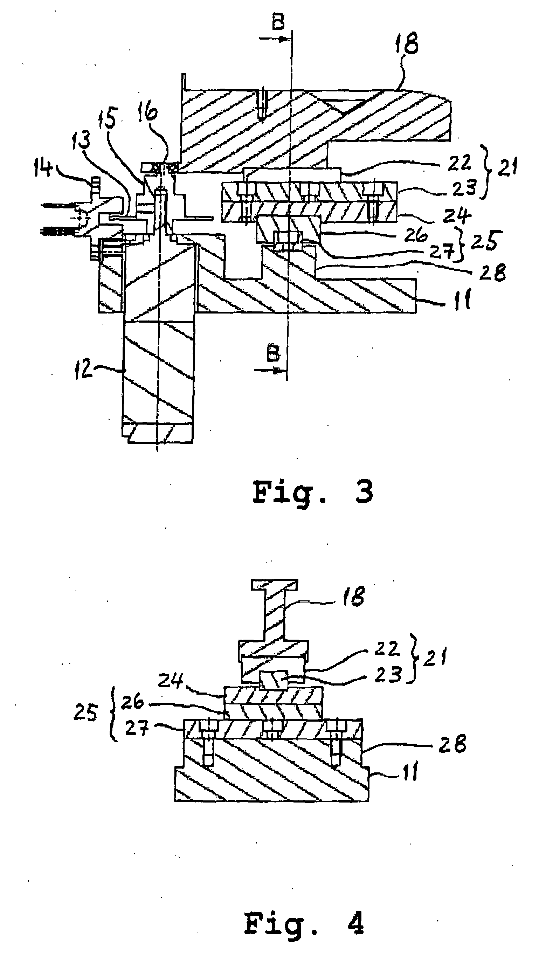

Figures 1 to 4 show a first embodiment of a shaker device according to the invention.

As shown by Figures 1 to 4, the shaker device comprises a rotatable disk 15 having an eccentric pin 16, a motor 12 for rotating disk 15 and thereby eccentric pin 16, and a movable piece 18 having a joint 19 for receiving said eccentric pin 16.

Motor 12 is mounted on a support plate 11.

The angular position of motor 12 is controlled by means of an encoder which is connected with motor 12 and is arranged in the housing of motor 12. The encoder receives signals from an electro-optical position detector which includes a light barrier detector 14 and a coded disk 13. Control of the angular position of motor 12 by means of the encoder and the position detector makes it possible to position a liquid container carrier and thereby liquid containers on that carrier in a reproducible way, at a predetermined position, e.g. at the end of a shaking operation of shaker device.

Movable piece 18 is mounted on a movable part 22 of a first linear motion guide 21 having a rail 23 on which movable part 22 can slide in Y-direction shown in Fig. 1, and rail 23 is mounted on an intermediate plate 24. Intermediate plate 24 is mounted on a movable part 26 of a second linear motion guide 25 having a rail 27 on which movable part 26 can slide in X-direction shown in Fig. 1. The X-direction is normal to the Y-direction. Rail 27 is mounted on a support 28 which is part of or permanently connected to support plate 11.

The intermediate plate is preferably made of a metal with low specific mass, e.g. aluminum.

Linear motion guides 21 and 25 are commercially available products and they provide accurate linear motion with low friction.

In a preferred embodiment linear motion guides 21 and 25 have sliding contact linear motion bearings.

In another preferred embodiment linear motion guides 21 and 25 have rolling element linear motion bearings, e.g. with balls as rolling elements, wherein the balls recirculate as the movable part of the linear motion guide moves along the rail thereof. Such linear motion guides are sold e.g. by THK Co. Ltd.

Movable piece 18 has a shape adapted for being removably connected to a movable part 35 of a rack 31 described hereinafter in Example 2.

When motor 12 rotates disk 15 and thereby eccentric pin 16, movable piece 18 is driven by pin 16 in a circular motion which results of a combination of displacements of movable piece 18 in X- and Y- direction as movable part 22 of the first linear motion guide 21 moves along rail 23 and movable part 26 of the second linear motion guide 25 moves along rail 27.

In preferred embodiments motor 12 rotates at a rotation speed comprised e.g. between 500 and 1200 rpm.

According to the invention, the circular motion of movable piece 18 is used for agitating liquids in containers as described hereinafter in Examples 2 and 3.

### EXAMPLE 2 - EXAMPLE OF A FIRST EMBODIMENT OF ANALYZER ACCORDING TO THE INVENTION

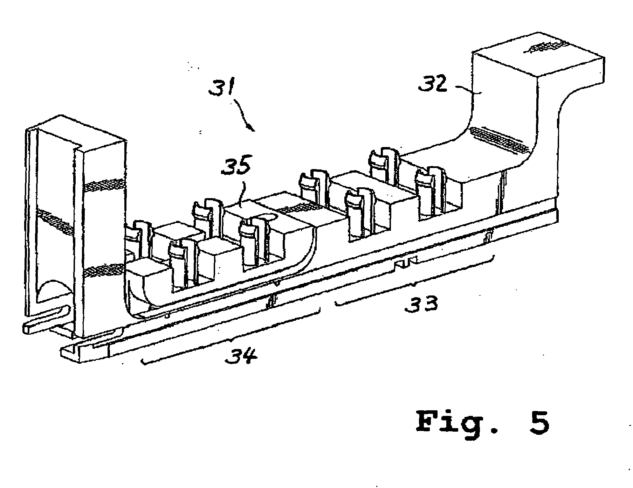

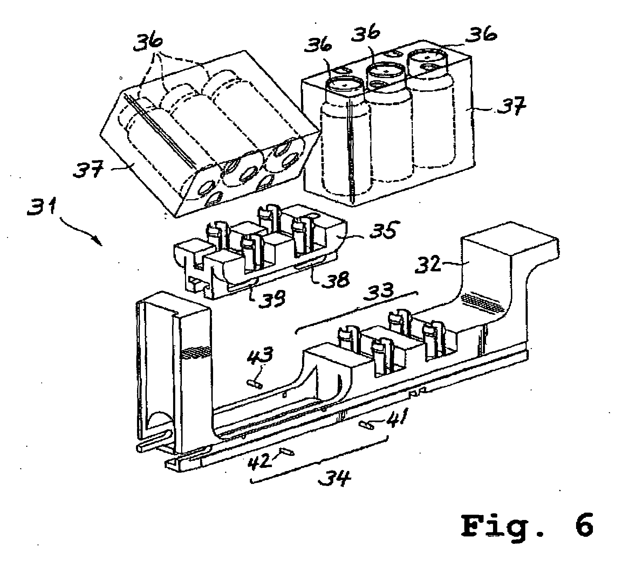

This embodiment of an analyzer comprises a rack 31 of the type shown by Figures 5 and 6 and a shaker device of the type described in Example 1.

As shown by Figures 5 and 6, rack 31 has a frame 32 and a movable part 35. Frame 32 has at least one section 33 for holding a first liquid containing component (not shown) which does not have to be agitated and at least one section 34 for holding a second liquid containing component (not shown) which has to be agitated. The movable part 35 of the rack 31 is located in a section 34. The shape and size of section 34 allows movement of movable part 35 within predetermined limits.

Rack 31 may be made of any suitable material, for instance a polycarbonate (PC).

The first and the second liquid containing components may be a single liquid container or a component comprising a casing 37 which contains one or more liquid containers 36 (see Fig. 6). A component of the latter type is described in European Patent Application EP 0564970 A2.

Fig. 6 shows a rack 31 having a section 34 that holds a liquid containing a component of the type described in European Patent Application EP 0564970 A2. Such a component comprises e.g. a casing 37 wherein one or more containers 36 are lodged. Each of the containers 36 contains a liquid to be agitated.

Movable part 35 has a shape adapted to be removably connected with the movable piece 18 of the shaker device described in Example 1.

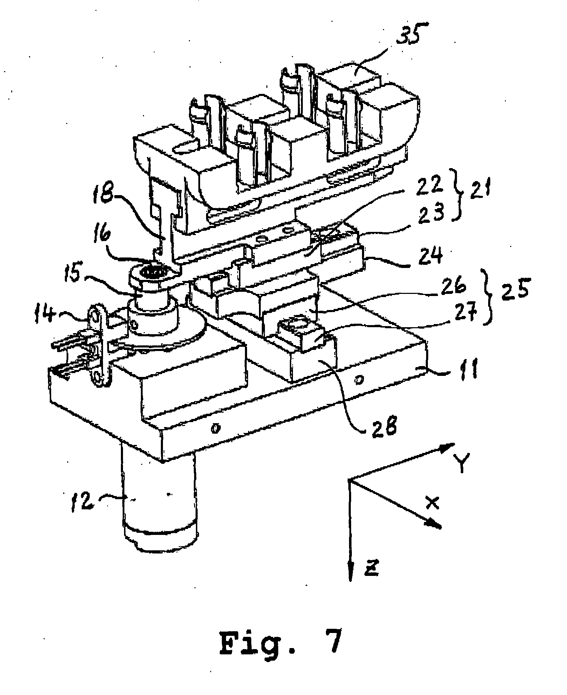

Fig.7 shows movable part 35 of rack 31 connected with movable piece 18 of the shaker device.

When movable part 35 of rack 31 is connected with movable piece 18 of the shaker device, movable part remains loosely connected with rack 31. This loose connection is achieved by means of pins 41, 42, 43 which cooperate with corresponding openings 38, 39 of removable part 35 shown in Fig. 6. Pins 41, 42, 43 are inserted in suitable openings of frame 32.

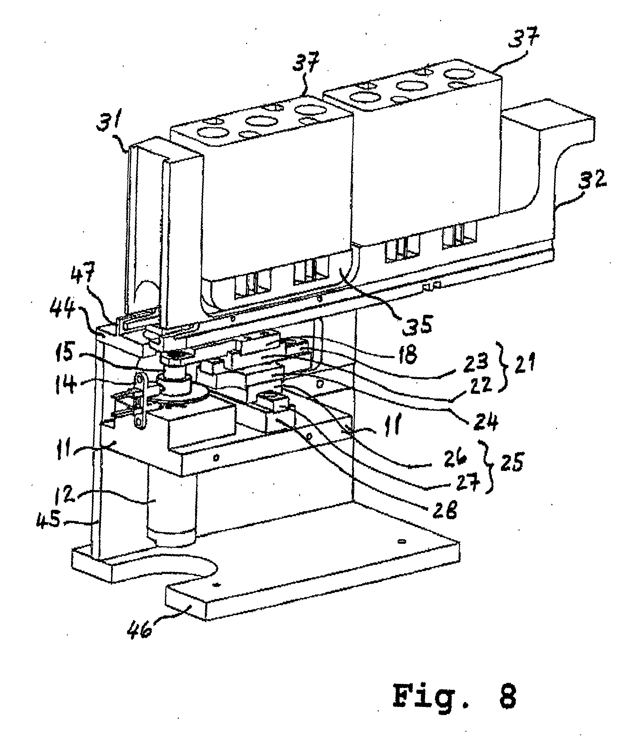

Figure 8 shows a portion of the analyzer including structure elements on which rack 31 and the shaker device are mounted.

A support plate 44 includes guides 47 for receiving and accurately positioning rack 31 in the analyzer.

Support plate 44 and support plate 11 are mounted on a support wall 45 which in turn is mounted on a basis plate 46.

When motor 12 rotates disk 15 and thereby eccentric pin 16, movable piece 18 is driven by pin 16 in a circular motion and transmits this motion to movable part 35 of rack 31, and thereby agitates liquids in containers 36 carried by a carrier 37 arranged on movable part 35 of rack 31.

### EXAMPLE 3 - EXAMPLE OF A SECOND EMBODIMENT OF AN ANALYZER ACCORDING TO THE INVENTION

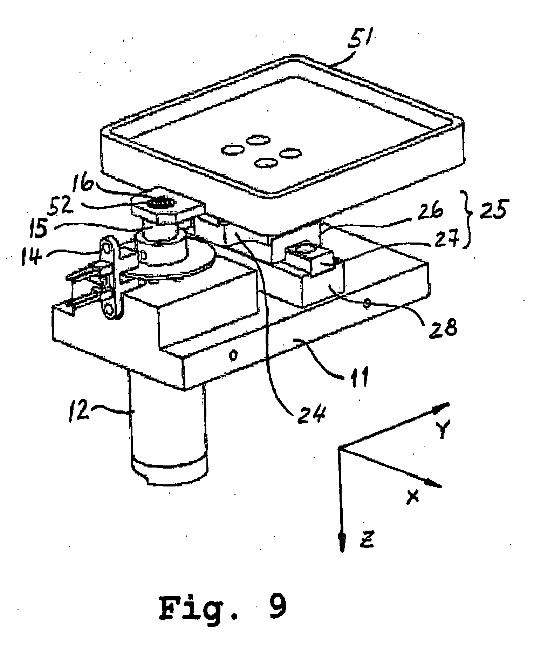

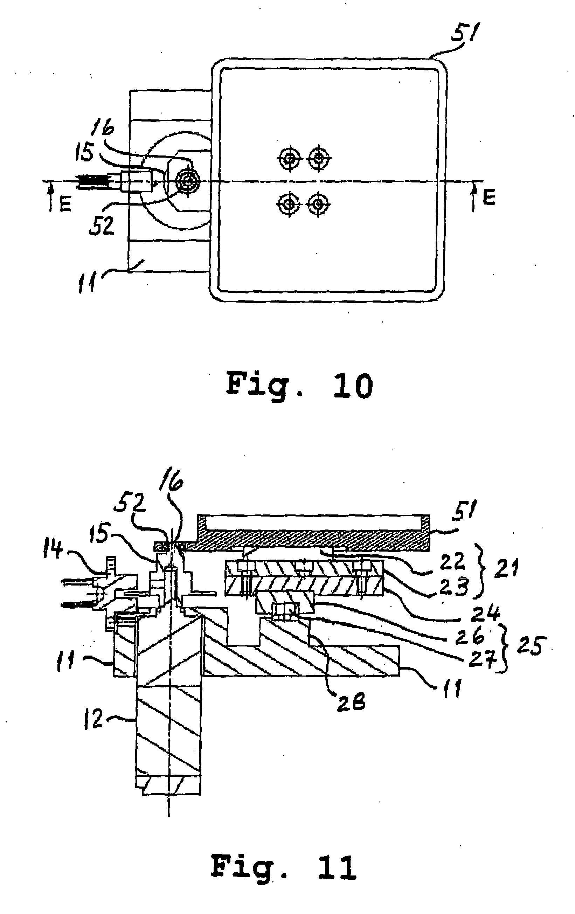

The structure of this second analyzer embodiment is similar to the structure of the first embodiment described above with reference to Figures 1-8, but this second analyzer embodiment comprises a second embodiment of a shaker device which is described hereinafter with reference to Figures 9 to 11.

The structure and operation of the shaker device shown by Figures 9 to 11 is similar to the structure and operation of the shaker device described with reference to Figures 1 to 4, but differs therefrom in that it has a movable piece 51 which is itself adapted for being used as carrier of liquid containers that have to be agitated.

When motor 12 rotates disk 15 and thereby eccentric pin 16, movable piece 18 is driven by pin 16 in a circular motion and transmits this motion directly to liquid containers arranged on movable piece 51, and thereby agitates liquids in those containers.

Although preferred embodiments of the invention have been described using specific terms, such description is for illustrative purposes only, and it is to be understood that changes and variations may be made without departing from the spirit or scope of the following claims.

## Claims

1. A shaker device for shaking liquids in a clinical chemistry analyzer comprising
(a) an eccentric pin (16) on a rotatable disk (15),
(b) a motor (12) for rotating said disk (15),
(c) a movable piece (18, 51) having a joint (19, 52) for receiving said eccentric pin (16),
(d) said movable piece (18, 51) being mounted on a first movable part (22) of a first linear motion guide (21) having a first rail (23) on which said movable part (22) can slide in a first direction (Y-direction), and
(e) said first rail (23) of said first linear motion guide (21) being mounted on an intermediate plate (24) which is mounted on a second movable part (26) of a second linear motion guide (25) having a second rail (27) on which said second movable part (26) can slide in a second direction (X-direction) which is normal to said first direction.

2. A shaker device according to claim 1, wherein said movable piece is a tray (51) adapted for receiving a liquid container or a holder of liquid containers.

3. An automatic analyzer for analyzing biological samples, said analyzer comprising
a shaker device according to claim 1, wherein said movable piece is a tray (51) adapted for receiving a liquid container or a holder of liquid containers.

4. An automatic analyzer for analyzing biological samples, said analyzer comprising
(a) a rack (31) for holding containers containing liquids, said rack comprising
(a.1) a frame (32) having two or more sections (33, 34), each section being adapted for receiving a liquid containing component,
at least one of the sections (33) of said frame being adapted for receiving a first liquid containing component (37) which is adapted for being removably but tightly mechanically connected to said frame,
(a.2) at least one movable part (35) adapted to be removably coupled to a shaker device, the latter movable part (35) being adapted for receiving and holding a second liquid containing component (37), and
(b) a shaker device according to claim 1, wherein said movable piece (18) of the shaker device and said movable part (35) of said rack (11) are adapted to be removably connected with each other.
